# FASCICULE DE BREVET EUROPEEN

(11) **EP 2 172 909 B1**
(45) Date de publication et mention de la délivrance du brevet: **08.08.2012**
(21) Numéro de dépôt: 09171202.6
(22) Date de dépôt: 24.09.2009
(51) Int. Cl.: G07B 17/00, H04N 1/00

(54) **Dispositif de numérisation pour système d'affranchissement**
Vorrichtung zur Digitalisierung für Frankiersystem
Digitizing device for franking system

(30) Priorité: 29.09.2008 FR 0856541
(43) Date de publication de la demande: 07.04.2010
(73) Titulaire: NEOPOST TECHNOLOGIES, 92220 Bagneux (FR)
(72) Inventeur: Audeon, David, 91300 Massy (FR); Coret, Francis, 93460 Gournay sur Marne (FR)
(74) Mandataire: David, Alain

(56) Documents cités:
- EP-A- 1 601 180
- WO-A-2008/078126
- DE-U1-202005 000 417
- US-A- 4 886 596

## Description

### Domaine de la technique

La présente invention se rapporte exclusivement au domaine du traitement de courrier et elle concerne plus particulièrement un dispositif de numérisation pouvant être intégré dans un module indépendant ou dans l'un quelconque des divers modules constituant un système d'affranchissement, comme le module d'alimentation en articles de courrier (dit aussi alimenteur), le module de pesée des articles de courrier (balance postale), le module d'impression de ces articles de courrier (machine à affranchir proprement dit) ou encore le module de pliage et d'insertion (plieuse/inséreuse).

### Art antérieur

Il est bien connu que les administrations postales ou les transporteurs privés utilisent des systèmes de numérisation complexes permettant de nombreuses applications de contrôle et de suivi, en particulier l'analyse des articles de courrier et leur tri suivant leur destination. Ces systèmes sont toutefois particulièrement coûteux et leur volume est important du fait notamment de l'utilisation de caméras. Ils ne sont donc réellement intéressants pour un expéditeur que si celui-ci est amené à traiter de gros volumes de courrier, comme un routeur. En effet, dans le cadre d'un système d'affranchissement standard disposé dans le local d'expédition du courrier d'une entreprise et formé par exemple d'un alimenteur et d'une machine à affranchir et éventuellement d'une balance postale et d'une plieuse/inséreuse, la numérisation des articles de courrier à l'aide de telles technologies n'est pas envisageable.

Pour ces systèmes d'affranchissement conventionnels, il devient nécessaire de recourir à des capteurs de petite dimension, de type CIS (Contact Image Sensor), utilisés aujourd'hui surtout dans les unités de numérisation des photocopieurs (voir EP 1 601 180). Or, dans ces photocopieurs, ce capteur CIS disposé derrière la vitre de l'appareil, s'il peut se déplacer d'une extrémité à l'autre de cette vitre, est généralement positionné à une distance (hauteur) déterminée et fixe de celle-ci et donc du document à photocopier quelle que soit son épaisseur.

Il en va tout autrement avec un système d'affranchissement. En effet, la face supérieure des articles de courrier n'est pas toujours plane, des différences d'épaisseur dues au contenu de l'article de courrier ou des défauts de forme dus au convoyage au travers du système peuvent altérer la qualité de la numérisation. De plus, la largeur de la zone numérisée est relativement grande, typiquement supérieure à 30 cm. En effet, en fonction du format de l'article de courrier, la position de l'adresse du destinataire est différente et il est souhaitable de pouvoir numériser non seulement cette adresse destinataire mais aussi les autres informations visibles sur l'article de courrier (montant d'affranchissement, adresse de l'expéditeur, etc). Une solution est illustrée dans la demande DE 2020054171.

Une autre solution à ces problèmes est donnée par le dispositif de numérisation spécialement adapté aux systèmes d'affranchissement et illustré dans la demande de brevet FR 2920567 déposée au nom de la demanderesse. Dans ce dispositif à hauteur variable et non plus fixe, le convoyage des articles de courrier se fait en gardant une référence commune qui est la face inférieure de ces articles de courrier. Ainsi, quelle que soit l'épaisseur de l'article de courrier, sa face inférieure passera donc dans le système toujours au même endroit.

Ce dispositif donne globalement satisfaction notamment pour des cadences d'affranchissement faibles ou moyennes. Par contre, pour des cadences élevées, il souffre de certains inconvénients provenant principalement de l'amplitude du déplacement du capteur qui être supérieur à 20 mm pour les articles de courrier les plus épais et provoque donc des chocs sur le capteur importants lorsque celui-ci retombe une fois l'article de courrier passé devant lui, les moyens élastiques de maintien du support du capteur n'assurant pas un amortissement suffisant lors de cette retombée et ne pouvant éviter parfois, notamment pour des cadences très élevées, un contact avec la surface inférieure de transport du système d'affranchissement.

### Objet et définition de l'invention

La présente invention a donc pour objet de pallier les inconvénients précités en installant un capteur dit CIS dans un système d'affranchissement qui permette une numérisation correcte de toute la surface des articles de courrier, quels que soient le format (du format carte de visite jusqu'au format le plus grand) et l'épaisseur de cet article de courrier sans entraîner de détérioration du capteur due aux variations d'épaisseur des articles de courrier numérisés.

Ces buts sont atteints par un dispositif de numérisation d'articles de courrier dans un module d'un système d'affranchissement, comprenant:
- un capteur d'images à contact (CIS) disposé selon une direction perpendiculaire à une direction de convoyage des articles de courrier dans ledit module,
- un support sur lequel est fixé ledit capteur et pouvant d'une part se déplacer verticalement sous l'action d'au moins un levier d'entraînement et d'autre part pivoter autour d'un axe d'articulation longitudinal,
**caractérisé en ce qu**'il comporte en outre au moins un pion de guidage monté sur au moins un flasque latéral dudit support du capteur d'images et apte à se déplacer dans une lumière d'un support de guidage solidaire de ladite partie fixe dudit module, le déplacement dudit pion dans ladite lumière limitant le déplacement vertical dudit support d'une part et son pivotement autour dudit axe d'articulation longitudinal d'autre part.

Ainsi, par l'emploi de ces moyens de guidage on évite tout choc avec la surface de transport des articles de courrier tout en favorisant le pivotement du capteur autour de son axe longitudinal.

Avantageusement, ladite lumière comporte deux parois horizontales et deux parois verticales obliques ayant un premier et un second angles d'inclinaison, lesdites deux parois horizontales définissant respectivement des limites haute et basse pour ledit déplacement vertical dudit support et lesdites deux parois verticales obliques définissant respectivement des limites d'inclinaison vers le haut ou vers le bas pour le pivotement dudit support autour dudit axe d'articulation longitudinal.

De préférence, lesdits premier et second angles d'inclinaison sont égaux.

Selon un mode de réalisation avantageux, le dispositif peut comporter en outre une plaque s'étendant depuis un bord longitudinal dudit support et soit présentant un angle d'inclinaison fixe prédéterminé par rapport à l'horizontale soit étant articulée autour d'un axe longitudinal de pivotement entre une position horizontale de repos et une position inclinée d'un angle d'inclinaison prédéterminé.

De préférence, le dispositif comporte un ou plusieurs éléments élastiques dont une extrémité est fixée sur ladite plaque et l'autre extrémité sur ledit support, pour aider au maintien de ladite plaque sur l'article de courrier.

Avantageusement, ladite plaque comporte plusieurs pentes successives permettant une action différenciée sur le déplacement vertical dudit support selon l'épaisseur dudit article de courrier.

Selon l'espace disponible, le dispositif de numérisation peut être monté dans un module indépendant du système d'affranchissement ou dans l'un des modules suivants du système d'affranchissement : alimenteur, balance postale, machine à affranchir, plieuse/inséreuse.

L'invention concerne également tout module indépendant ou non d'un système d'affranchissement comportant un tel dispositif de numérisation.

### Brève description des dessins

L'invention sera mieux comprise au vu de la description détaillée qui va suivre accompagnée par des exemples illustratifs et non limitatifs en regard des figures suivantes sur lesquelles :
- les figures 1 et 2 sont des vues générales de systèmes d'affranchissements mettant en oeuvre l'invention,
- les figures 3 et 4 sont des vues respectivement en coupe et en perspective d'un exemple de réalisation de l'invention, et
- les figures 5 et 6 illustrent deux positions possibles pour le support de capteur de l'invention.

### Description détaillée de modes de réalisation

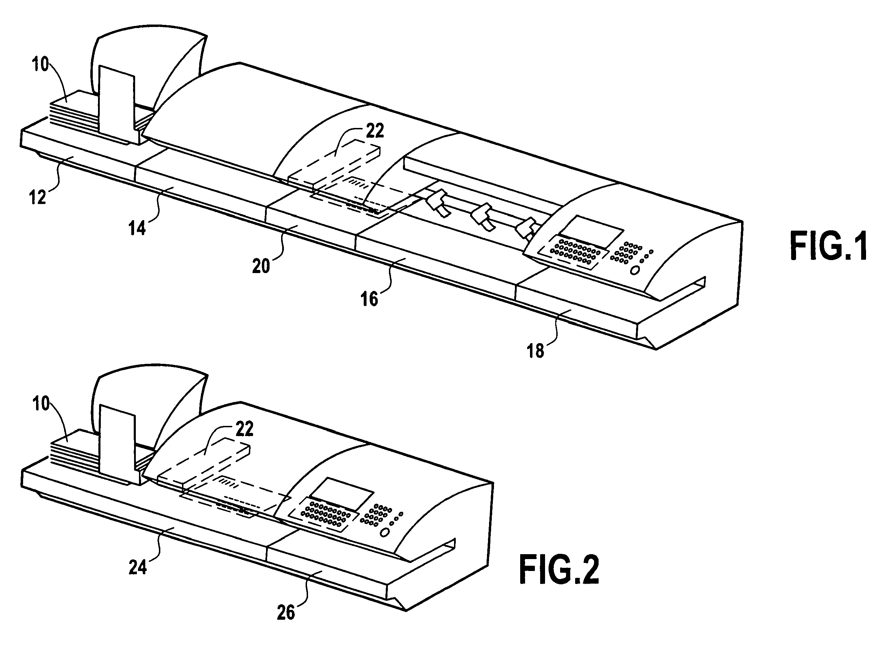

La figure 1 illustre un premier exemple de réalisation d'un système d'affranchissement d'articles de courrier auquel l'invention peut être appliquée et comportant, comme il est connu et disposés d'amont en aval selon la direction d'avancée des articles de courrier 10 : un module 12 d'alimentation en articles de courrier destiné à recevoir une pile d'articles de courrier typiquement en vrac (c'est à dire de dimensions et poids différents) ; un module 14 de sélection et transport un à un de ces articles de courrier ; de préférence un module 16 de pesée dynamique pour déterminer le poids et éventuellement les dimensions de chaque article de courrier sélectionné et un module d'impression 18 destiné à imprimer une empreinte postale sur chacun des articles de courrier ainsi sélectionnés un à un et pesés. Le module d'impression est de préférence, comme il est aussi connu, relié à un serveur (non représenté) d'un concessionnaire de ce système d'affranchissement lui-même relié à un serveur d'une administration postale ou d'un transporteur privé assurant la distribution du courrier (non représenté).

Dans cet exemple de réalisation, le système d'affranchissement comporte en outre un module indépendant 20 disposé en amont du module de pesée dynamique (mais une disposition autre est aussi envisageable), pour faire l'acquisition d'une image numérique de l'article de courrier 10 et en extraire différentes données nécessaires à son traitement et son suivi comme l'adresse du destinataire ou un identifiant unique porté sur l'article de courrier. Pour ce faire, ce module comporte un dispositif de numérisation muni d'un capteur d'images 22 associé à des logiciels de reconnaissance de codes à barres et de reconnaissance OCR. Pour permettre l'affichage sur un écran de tout ou partie de l'image de l'article de courrier ainsi numérisée et, si nécessaire, la correction des données postales extraites de cette image, le module d'impression est muni d'une interface utilisateur perfectionnée avec un clavier pouvant être un clavier physique, interagissant avec un clavier virtuel de l'écran qui est alors avantageusement de type tactile, ou être remplacé purement et simplement par un écran tactile. Le module d'impression peut aussi comporter des moyens de stockage (non représentés) de type base de données pour stocker l'image de l'enveloppe ainsi numérisée.

Le capteur est avantageusement un capteur d'images à contact (CIS : contact image sensor) de type linéaire dont la longueur est prévue pour numériser au moins une largeur d'un article de courrier couvrant l'empreinte postale et l'adresse destinataire quel que soit le format de cet article de courrier. Ce capteur d'images linéaire est typiquement un module intégré comportant des cellules de détection adjacentes à semiconducteur CCD ou CMOS, une optique de collimation et un système d'éclairage qui lorsqu'il est activé éclaire la surface sur laquelle le capteur est positionné et délivre en retour au niveau de chacune des cellules de détection un signal proportionnel à la lumière réfléchie par la surface de l'article de courrier.

Un second exemple de réalisation d'un système d'affranchissement pouvant mettre en oeuvre l'invention est illustré à la figure 2. Il comporte comme il est aussi connu et disposés d'amont en aval selon la direction d'avancée des articles de courrier 10 : un module 24 d'alimentation, de sélection et de transport destiné à recevoir une pile d'articles de courrier typiquement en vrac (c'est à dire de dimensions et poids différents), à sélectionner et à transporter un à un ces articles de courrier vers un module d'impression 26 destiné à imprimer une empreinte postale sur chacun des articles de courrier ainsi sélectionnés un à un. Comme précédemment, ce module d'impression peut être relié à un serveur (non représenté) d'un concessionnaire du système d'affranchissement. Dans cet autre exemple de réalisation, le capteur d'images 22 du dispositif de numérisation destiné à faire l'acquisition de l'image numérique de l'article de courrier 10 et en extraire les différentes données nécessaires à son traitement et son suivi n'est toutefois plus disposé dans un module indépendant du système d'affranchissement mais directement dans le module d'alimentation 24. Il est bien entendu, comme précédemment, associé à des logiciels de reconnaissance de codes à barres et de reconnaissance OCR et le module d'impression 26 comporte une interface utilisateur appropriée pour, si nécessaire, corriger des erreurs dues à la reconnaissance de caractères.

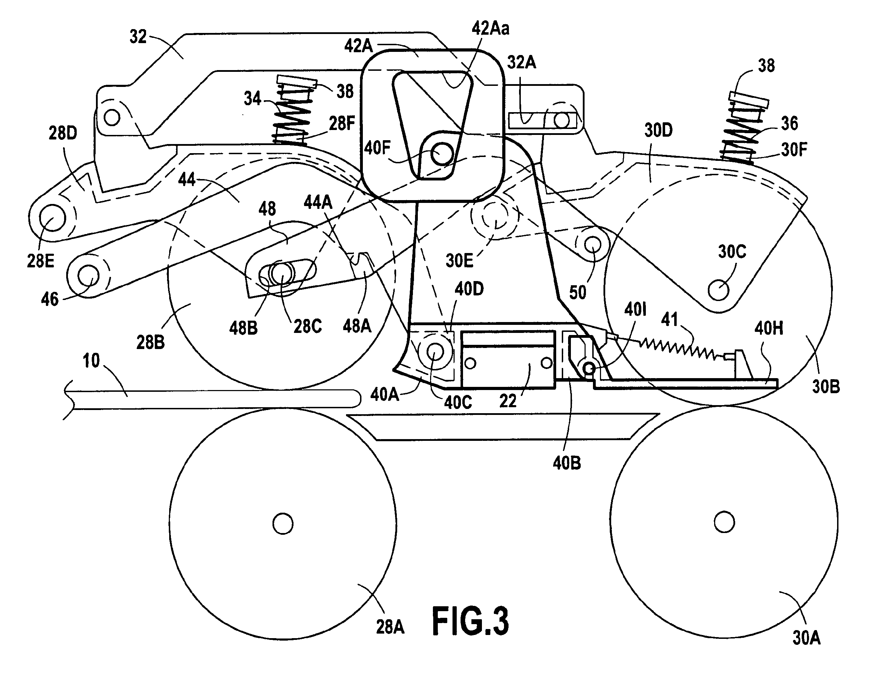

La figure 3 montre plus en détail le montage du capteur d'images linéaire à contact 22 entre les rouleaux de transport du module indépendant 20 de la figure 1 ou du module d'alimentation 24 de la figure 2. L'un comme l'autre de ces modules comporte en effet plusieurs rouleaux de transport formés par exemple de deux ensembles adjacents de rouleaux superposés de transport avant 28A, 28B et arrière 30A, 30B pour convoyer les articles de courrier au travers du module considéré. Comme il est connu, les rouleaux supérieurs 28B, 30B de ces ensembles sont montés fous sur des axes de rotation transverses 28C, 30C au chemin de transport des articles de courrier et solidaires de chapes ou étriers 28D, 30D supports de ces rouleaux et reliées entre elles par un tirant 32 dont une des extrémités comporte une lumière 32A. Pour s'adapter aux différentes épaisseurs des articles de courrier, ces chapes peuvent chacune pivoter indépendamment verticalement autour d'un axe fixe d'articulation 28E, 30E à l'encontre de moyens élastiques 34, 36 dont une extrémité est en prise avec un plot supérieur 28F, 30F des chapes supports des rouleaux et l'autre extrémité solidaire d'une partie fixe 38 du module. Les rouleaux inférieurs 28A, 30A (qui pourraient avantageusement être remplacés par une courroie) sont quant à eux motorisés et actionnés en synchronisme par différents moyens connus de commande et de contrôle nécessaires à leur fonctionnement et qu'il est donc inutile de décrire plus en détail.

Entre les deux ensembles adjacents de rouleaux superposés de transport est donc disposé le capteur linéaire à contact 22 monté dans un support mobile 40 qui peut librement à la fois se déplacer verticalement et pivoter autour d'un axe longitudinal 40C, la mobilité ainsi obtenue permettant au capteur de suivre la surface supérieure de l'article de courrier qui n'est pas uniforme et donc d'assurer par son déplacement et sa position privilégiée dans le module une qualité de numérisation optimale quelle que soit l'épaisseur des articles de courrier, notamment en présence d'enveloppes épaisses. Cette numérisation et la reconnaissance automatique des diverses informations portées sur l'article de courrier sont assurées par un moyen de traitement (non représenté) formé simplement par un circuit programmable, comme il est décrit dans la demande de brevet citée en préambule, synchronisé à partir des impulsions d'un codeur rotatif ou simplement par la détection de changement d'intensité lumineuse apparaissant systématiquement lors du passage d'un article de courrier à un autre. Des moyens logiciels appropriés de reconnaissance OCR ou de codes à barres présents dans des moyens mémoires associés au moyen de traitement permettront alors la reconnaissance des données d'adresse ou de code imprimées sur les articles de courrier et si nécessaire la création d'une base de données d'adresses et de suivi de ces articles de courrier.

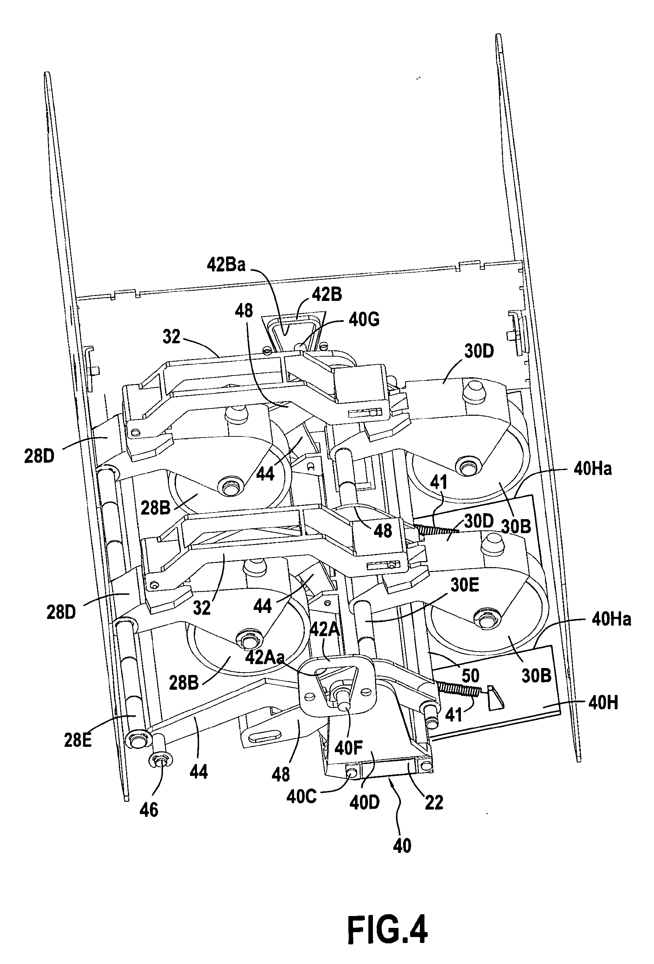

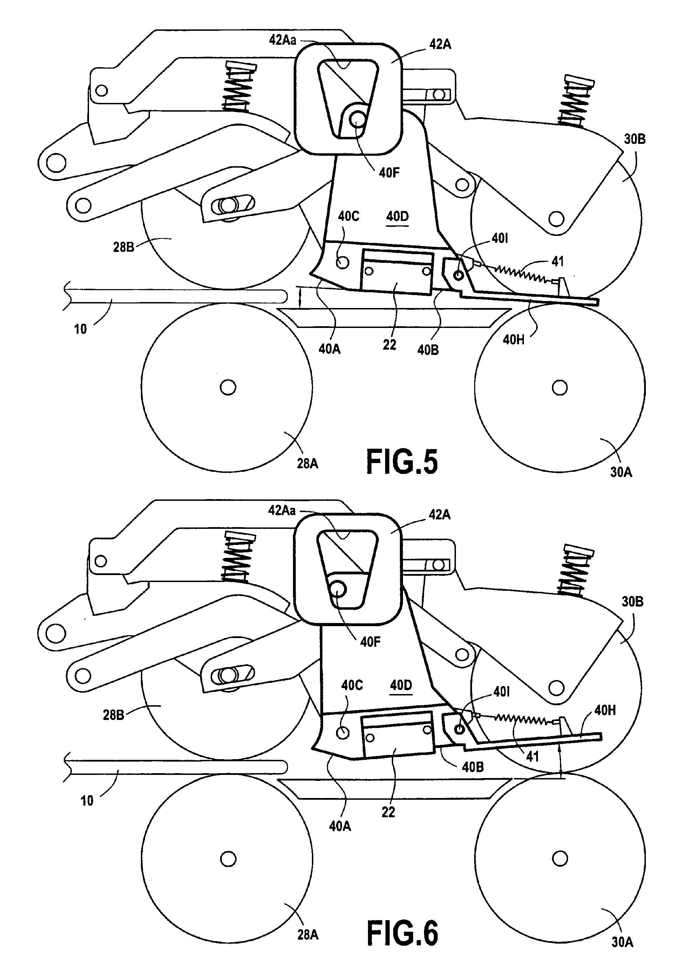

Selon l'invention, et comme l'illustre également la perspective de la figure 4, le support de capteur 40 dont les parois longitudinales sont prolongées par un déflecteur amont 40A et un déflecteur aval 40B pour faciliter la montée et la descente du capteur sur l'article de courrier comporte en outre deux flasques latéraux 40D, 40E muni chacun d'un pion de guidage 40F, 40G pouvant se déplacer dans une lumière 42Aa, 42Ba d'un support de guidage 42A, 42B solidaire de la partie fixe du module. Ainsi, cette lumière qui présente une forme sensiblement triangulaire, encadre le déplacement du support et donc du capteur d'images 22 à la fois verticalement, le capteur ne pouvant se déplacer verticalement que dans les limites fixées par les deux parois horizontales de cette lumière, ce qui lui interdit soit de venir en contact avec la surface de transport des articles de courrier (limite définie par la paroi horizontale inférieure de la lumière) soit de remonter au dessus d'une hauteur maximale prédéterminée (limite définie par la paroi horizontale supérieure de la lumière), et latéralement, le capteur ne pouvant pivoter autour de son axe longitudinal 40C que dans les limites fixées par les deux parois verticales obliques de la lumière, pour selon la déformation de l'article de courrier à laquelle le capteur souhaite se conformer soit s'incliner vers le haut (voir la figure 6) d'un premier angle d'inclinaison maximal (limite définie par la paroi verticale oblique avant de la lumière) soit s'incliner vers le bas (voir la figure 5) d'un second angle d'inclinaison maximal (limite définie par la paroi verticale oblique arrière de la lumière), ces premier et second angles d'inclinaison pouvant être égaux ou non selon l'amplitude de pivotement souhaitée dans chaque sens.

Afin de ralentir la descente du capteur après le passage d'un l'article de courrier, le support 40 et plus précisément son déflecteur aval 40B est prolongé sur tout son bord longitudinal par une plaque 40H qui présente un angle déterminé d'inclinaison par rapport à l'horizontale, typiquement compris entre 0 et 10 degrés. La longueur de cette plaque est déterminée par cet angle et l'épaisseur maximale des articles de courrier pouvant être traités par la machine à affranchir car plus la plaque sera longue, plus la descente du capteur sera ralentie. Ainsi, pour un article peu épais on pourra avoir une plaque plus courte. Typiquement, la longueur de la plaque est comprise entre 1 et 7 cm. Pour permettre le passage des rouleaux de transport, cette plaque comporte des rainures 40Ha, 40Hb au droit de ces rouleaux donnant ainsi à cette plaque la forme d'un peigne. Dans un mode de réalisation alternatif, la plaque peut être articulée autour d'un axe longitudinal de pivotement 40I entre une position de repos horizontale et une position inclinée d'un angle maximal de 10 degrés fixée par une butée. Un ou plusieurs éléments élastiques 41 peuvent aider au maintien de la plaque en appui sur l'article de courrier. Cette plaque peut être bombée ou présenter plusieurs pentes successives agissant différemment selon l'épaisseur de l'article de courrier, de sorte par exemple à agir sur les articles de courrier à partir d'une épaisseur prédéterminée. En effet, un appui trop prononcé sur les articles de courrier de faible épaisseur pourrait avoir tendance à freiner leur avancée ou à les positionner de travers.

Le support est articulé à une extrémité d'un ou plusieurs premiers leviers d'entraînement 44 dont l'autre extrémité est elle même articulée sur un premier axe d'articulation commun 46 solidaire de la partie fixe 38 du module et disposé en amont de l'axe de rotation 28C des rouleaux de transport avant à une hauteur au moins égale à l'épaisseur maximale d'un article de courrier pouvant être convoyé mais inférieure à celle de l'axe fixe d'articulation 28E de la chape support des rouleaux de transport avant, c'est à dire en pratique sensiblement sur le même plan que l'axe de rotation 28C dans sa position neutre de repos. Chaque premier levier d'entraînement présente une forme en pont à la courbure accentuée pour passer au dessus de l'axe de rotation 28C et sa face inférieure comporte une zone d'appui destinée à reposer sur un barreau de levage d'un second levier d'entraînement 48 dont une extrémité comportant une lumière 48B est destinée à être traversée par l'axe de rotation précité 28C des rouleaux de transport avant et dont l'autre extrémité est articulée sur un second axe d'articulation commun 50 solidaire de la partie fixe 38 du module et disposé en aval de l'axe de rotation 28C des rouleaux de transport avant et plus précisément en aval de l'axe fixe d'articulation 30E de la chape support des rouleaux de transport arrière mais en amont de l'axe de rotation 30C de ces rouleaux de transport arrière, à une hauteur supérieure à l'épaisseur maximale d'un article de courrier mais inférieure à celle de l'axe fixe d'articulation 30E, de préférence sensiblement sur le même plan que le premier axe d'articulation commun. Ce second levier présente également une forme en pont à la courbure accentuée pour passer au dessus de l'axe fixe d'articulation 30E de la chape support des rouleaux de transport arrière, de sorte que l'ensemble de ces deux leviers forme sensiblement une figure en W inversé.

La mise en oeuvre de la numérisation est effectuée comme suit.

Lorsque l'article de courrier pénètre dans le module, il va tout d'abord soulever les rouleaux supérieurs de transport avant, ce qui va automatiquement entraîner la levée du second levier d'entraînement dont la seconde extrémité est reliée à l'axe de rotation de ces rouleaux. Cette levée du second levier va alors entraîner directement ou avec un léger retard, selon que le barreau de levage est ou non en contact avec la zone d'appui correspondante, celle du premier levier d'entraînement qui va entraîner à son tour le soulèvement du support du capteur d'images à contact. Ainsi, le capteur est soulevé avant que l'article de courrier n'arrive à son contact et le choc avec le front de l'article de courrier est donc particulièrement atténué. De même, par l'effet des tirants, les rouleaux supérieurs de transport arrière sont aussi soulevés avant que l'article de courrier ne les atteint.

L'article de courrier transporté par les rouleaux inférieurs de transport motorisés va ensuite progresser dans le module sous le capteur d'images qui va procéder à la numérisation. Pendant cette avancée, et si l'article de courrier n'est pas parfaitement plat, le capteur va alors suivre les différences d'épaisseur de cet article de courrier en pivotant autour de son axe longitudinal, dans les limites fixées par les deux parois verticales obliques de la lumière, et s'incliner tantôt vers le haut tantôt vers le bas selon ces différences, et cela jusqu'à ce que la partie arrière de l'article de courrier vienne à quitter la prise des rouleaux de transport avant entraînant une retombée des rouleaux supérieurs avant vers leur position de repos initiale et corrélativement un abaissement du second levier d'entraînement. Toutefois, le capteur d'images étant à cet instant encore en contact avec l'article de courrier, le premier levier d'entraînement ne bouge pas entraînant une désolidarisation du barreau de levage et de la zone d'appui et ce n'est qu'une fois la numérisation achevée et que la partie arrière de l'article de courrier aura dépassé le capteur d'images que celui-ci va retomber et regagner sa position initiale en entraînant avec lui dans sa descente le premier levier d'entraînement jusqu'à retrouver lui aussi sa position initiale de repos dans laquelle sa zone d'appui se retrouve en contact avec le barreau de levage du second levier.

Toutefois, la descente du capteur n'est pas brutale mais progressive du fait de la présence de la plaque qui restant en contact avec l'article de courrier permet de maintenir le capteur dans une position intermédiaire entre sa position la plus haute sur l'article de courrier et sa position de repos la plus basse. Ainsi, lorsque la plaque perd le contact avec l'article de courrier, le capteur a presque atteint cette position de repos et sa hauteur de chute est alors particulièrement réduite et non plus égale à la hauteur de l'article de courrier.

On notera que s'il peut être relativement aisé de déplacer le capteur d'images avec seulement un seul ensemble de premier et second leviers d'entraînement, il est bien entendu qu'il peut aussi être envisagé de le faire avec deux ou plusieurs ensembles selon que le module comporte une ou plusieurs séries de rouleaux d'entraînement par ensemble superposés de rouleaux de transport. Ainsi, avec des ensembles superposés de rouleaux de transports comportant chacun deux séries de rouleaux de transport, il peut être envisagé un unique ensemble de premier et second leviers d'entraînement disposé entre ces deux séries de rouleaux, deux ensembles de premier et second leviers d'entraînement disposés de part et d'autre de ces deux séries ou encore trois ensembles de premier et second leviers d'entraînement disposés d'une part entre les deux et d'autre part de part et d'autre de ces deux séries. On notera également qu'il est aussi possible d'envisager une disposition dissymétrique avec deux ensembles de premier et second leviers d'entraînement encadrant une des deux séries de rouleau de transport.

## Revendications

1. Dispositif de numérisation d'articles de courrier dans un module d'un système d'affranchissement, comprenant:
• un capteur d'images à contact (CIS 22) disposé selon une direction perpendiculaire à une direction de convoyage des articles de courrier dans ledit module,
• un support (40 ; 40A, 40B) sur lequel est fixé ledit capteur et pouvant d'une part se déplacer verticalement sous l'action d'au moins un levier d'entraînement (44, 48) et d'autre part pivoter autour d'un axe d'articulation longitudinal,
**caractérisé en ce qu'**il comporte en outre au moins un pion de guidage (40F, 40G) monté sur au moins un flasque latéral (40D, 40E) dudit support du capteur d'images et apte à se déplacer dans une lumière (42Aa, 42Ba) d'un support de guidage (42A, 42B) solidaire d'une partie fixe dudit module, le déplacement dudit pion dans ladite lumière limitant le déplacement vertical dudit support d'une part et son pivotement autour dudit axe d'articulation longitudinal d'autre part.

2. Dispositif de numérisation selon la revendication 1, **caractérisé en ce que** ladite lumière comporte deux parois horizontales et deux parois verticales obliques ayant un premier et un second angles d'inclinaison, lesdites deux parois horizontales définissant respectivement des limites haute et basse pour ledit déplacement vertical dudit support et lesdites deux parois verticales obliques définissant respectivement des limites d'inclinaison vers le haut ou vers le bas pour le pivotement dudit support autour dudit axe d'articulation longitudinal.

3. Dispositif de numérisation selon la revendication 2, **caractérisé en ce que** lesdits premier et second angles d'inclinaison sont égaux.

4. Dispositif de numérisation selon l'une quelconque des revendications 1 à 3, **caractérisé en ce qu'**il comporte en outre une plaque (40H) s'étendant depuis un bord longitudinal dudit support et présentant un angle d'inclinaison fixe prédéterminé par rapport à l'horizontale.

5. Dispositif de numérisation selon l'une quelconque des revendications 1 à 3, **caractérisé en ce qu'**il comporte en outre une plaque (40H) s'étendant depuis un bord longitudinal dudit support et articulée autour d'un axe longitudinal de pivotement (401) entre une position horizontale de repos et une position inclinée d'un angle d'inclinaison prédéterminé.

6. Dispositif de numérisation selon l'une quelconque des revendications 1 à 5, **caractérisé en ce qu'**il comporte en outre un ou plusieurs éléments élastiques (41) dont une extrémité est fixée sur ladite plaque et l'autre extrémité sur ledit support, pour aider au maintien de ladite plaque sur l'article de courrier.

7. Dispositif de numérisation selon l'une quelconque des revendications 1 à 6, **caractérisé en ce que** ladite plaque comporte plusieurs pentes successives permettant une action différenciée sur le déplacement vertical dudit support selon l'épaisseur dudit article de courrier.

8. Dispositif de numérisation selon l'une quelconque des revendications 1 à 7, **caractérisé en ce qu'**il est monté dans un module indépendant du système d'affranchissement.

9. Dispositif de numérisation selon l'une quelconque des revendications 1 à 7, **caractérisé en ce qu'**il est monté dans l'un des modules suivants du système d'affranchissement : alimenteur, balance postale, machine à affranchir, plieuse/inséreuse.

## Claims

1. A mailpiece scanner device in a module of a franking system, comprising:
a contact image sensor (CIS 22) disposed in a direction perpendicular to the conveying direction in which the mailpieces are conveyed through said module; and
a support (40; 40A, 40B) to which said sensor is fastened and which is mounted firstly to move vertically under the action of at least one drive lever (44, 48) and secondly to pivot about a longitudinal hinge pin;
**characterized in that** said mailpiece scanner device further comprises at least one guide stud (40F, 40G) mounted on at least one side cheek plate (40D, 40E) of said image sensor support and suitable for moving within a slot (42Aa, 42Ba) of a guide support (42A, 42B) secured to a stationary portion of said module, the movement of said stud within said slot limiting firstly the vertical movement of said support and secondly pivoting of said support about said longitudinal hinge pin.

2. A scanner device according to claim 1, **characterized in that** said slot has two horizontal walls and two slanting vertical walls having first and second angles of inclination, said two horizontal walls respectively defining an upper limit and a lower limit for said vertical movement of said support, and said slanting vertical walls respectively defining an upward inclination limit and a downward inclination limit for the pivoting of said support about said longitudinal hinge pin.

3. A scanner device according to claim 2, **characterized in that** said first and second angles of inclination are mutually equal.

4. A scanner device according to any one of claims 1 to 3, **characterized in that** it further comprises a plate (40H) extending from a longitudinal edge of said support and presenting a predetermined fixed angle of inclination relative to the horizontal.

5. A scanner device according to any one of claims 1 to 3, **characterized in that** it further comprises a plate (40H) extending from a longitudinal edge of said support and hinged about a longitudinal pivot pin (401) to pivot between a rest horizontal position, and an inclined position in which it is inclined by a predetermined inclination.

6. A scanner device according to any one of claims 1 to 5, **characterized in that** it further comprises one or more resilient elements (41), one end of which is fastened to said plate and the other end of which is fastened to said support, for assisting with holding said plate on the mailpiece.

7. A scanner device according to any one of claims 1 to 6, **characterized in that** said plate has a plurality of successive slopes enabling it to act on the vertical movement of said support differently depending on the thickness of said mailpiece.

8. A scanner device according to any one of claims 1 to 7, **characterized in that** it is mounted in an independent module of the franking system.

9. A scanner device according to any one of claims 1 to 7, **characterized in that** it is mounted in one of the following modules of the franking system: feeder; postal scales; franking machine; and folder/stuffer.

## Patentansprüche

1. Vorrichtung zur Digitalisierung von Poststücken in einem Modul eines Frankiersystems, umfassend:
- einen Kontakt-Bildsensor (CIS 22), der in einer Richtung senkrecht zu einer Beförderungsrichtung der Poststücke in dem Modul angeordnet ist,
- einen Halter (40; 40A, 40B), an dem der Sensor befestigt ist und der sich einerseits unter der Wirkung wenigstens eines Antriebshebels (44, 48) vertikal bewegen kann und andererseits um eine Längsgenlenkachse verschwenken kann,
**dadurch gekennzeichnet, daß** sie ferner wenigstens einen Führungsstift (40F, 40G) umfaßt, der an wenigstens einem Seitenflansch (40D, 40E) des Halters des Bildsensors angebracht ist und der geeignet ist, sich in einer Öffnung (42Aa, 42Ba) eines Führungshalters (42A, 42B), der mit einem festen Teil des Moduls fest verbunden ist, zu bewegen, wobei die Bewegung des Stifts in der Öffnung die Vertikalbewegung des Halters einerseits und dessen Verschwenken um die Längsgelenkachse andererseits begrenzt.

2. Digitalisierungsvorrichtung nach Anspruch 1, **dadurch gekennzeichnet, daß** die Öffnung zwei horizontale Wände und zwei schräge vertikale Wände mit einem ersten und einem zweiten Neigungswinkel umfaßt, wobei die beiden horizontalen Wände eine obere bzw. eine untere Begrenzung für die Vertikalbewegung des Halters definieren und die beiden schrägen vertikalen Wände eine Aufwärts- bzw. eine Abwärtsneigungsbegrenzung für das Verschwenken der Halters um die Längsgelenkachse definieren.

3. Digitalisierungsvorrichtung nach Anspruch 2, **dadurch gekennzeichnet, daß** der erste und der zweite Neigungswinkel gleich sind.

4. Digitalisierungsvorrichtung nach einem der Ansprüche 1 bis 3, **dadurch gekennzeichnet, daß** sie ferner eine Platte (40H) umfaßt, die sich von einer Längskante des Halters aus erstreckt und die einen vorbestimmten festen Neigungswinkel gegenüber der Horizontalen aufweist.

5. Digitalisierungsvorrichtung nach einem der Ansprüche 1 bis 3, **dadurch gekennzeichnet, daß** sie ferner eine Platte (40H) umfaßt, die sich von einer Längskante des Halters aus erstreckt und die um eine Längsschwenkachse (40I) zwischen einer horizontalen Ruheposition und einer um einen vorbestimmten Neigungswinkel geneigten Position angelenkt ist.

6. Digitalisierungsvorrichtung nach einem der Ansprüche 1 bis 5, **dadurch gekennzeichnet, daß** sie ferner ein oder mehrere Federelemente (41) umfaßt, von denen ein Ende an der Platte und das andere Ende an dem Halter befestigt ist, um das Halten der Platte an dem Poststück zu unterstützen.

7. Digitalisierungsvorrichtung nach einem der Ansprüche 1 bis 6, **dadurch gekennzeichnet, daß** die Platte mehrere aufeinanderfolgende Neigungen aufweist, die ein differenziertes Einwirken auf die Vertikalbewegung des Halters entsprechend der Dicke des Poststücks ermöglichen.

8. Digitalisierungsvorrichtung nach einem der Ansprüche 1 bis 7, **dadurch gekennzeichnet, daß** sie in einem unabhängigen Modul des Frankiersystems angebracht ist.

9. Digitalisierungsvorrichtung nach einem der Ansprüche 1 bis 7, **dadurch gekennzeichnet, daß** sie in einem der folgenden Module des Frankiersystems angebracht ist: Zuführeinrichtung, Postwaage, Frankiermaschine, Falz-/Kuvertiereinrichtung.
